# DEMANDE DE BREVET EUROPEEN

(11) **EP 0 603 946 A1**
(43) Date de publication de la demande: **29.06.1994**
(21) Numéro de dépôt: 93203538.9
(22) Date de dépôt: 15.12.1993
(51) Int. Cl.: H04L 12/46

(54) **Equipement d'interconnexion de réseaux à fonction d'apprentissage d'adresses et commutateur comportant un tel équipement**

(30) Priorité: 22.12.1992 FR 9215505
(71) Demandeur: PHILIPS COMMUNICATION D'ENTREPRISE, 75013 Paris (FR); Philips Electronics N.V., 5621 BA Eindhoven (NL)
(72) Inventeur: Coulon, Ariane, F-75008 Paris (FR)
(74) Mandataire: Chaffraix, Jean

(57) **Abrégé**

Un tel équipement (31) permet de relier des réseaux locaux distants au moyen d'un réseau intermédiaire et dispose d'une fonction d'apprentissage des adresses des stations desdits réseaux locaux.

Pour cela, une première table d'adressage (TL) lui permet de mémoriser l'adresse de chaque station de ses réseaux locaux lorsqu'elle émet une trame pour la première fois. Il envoie alors une trame de service aux autres équipements d'interconnexion de réseaux afin qu'ils enregistrent cette adresse ainsi que la référence de l'équipement d'interconnexion de réseaux auquel elle est rattachée, dans une seconde table d'adressage (TD). La consultation de ces deux tables permet d'aiguiller les trames de données sur le réseau intermédiaire.

Application à des systèmes d'interconnexion de réseaux locaux dans lesquels on cherche à réduire la charge du réseau intermédiaire et le temps d'apprentissage d'adresses des stations de ces réseaux locaux.

## Description

La présente invention a pour objet un équipement d'interconnexion de réseaux qui met en oeuvre une fonction d'apprentissage d'adresses et qui comporte :
- au moins un premier port pour se relier à au moins un réseau local,
- des deuxièmes ports pour se relier à un réseau intermédiaire de telle sorte qu'une première station d'un premier réseau local connecté à un premier équipement d'interconnexion de réseaux puisse échanger des trames de données avec une seconde station d'un second réseau local connecté à un second équipement d'interconnexion de réseaux relié au premier par le réseau intermédiaire,
- une pluralité de tables d'adressage,
- des moyens de gestion de trames de service, échangées entre équipements d'interconnexion de réseaux,
- des moyens d'émission pour émettre les trames sur ses deuxièmes ports en direction des autres équipements d'interconnexion de réseaux du réseau intermédiaire,
- des moyens de réception pour recevoir sur ses deuxièmes ports les trames émises par les autres équipements d'interconnexion de réseaux du réseau intermédiaire.

Un tel équipement d'interconnexion de réseaux est soumis à la contrainte suivante : lors du démarrage d'un système d'interconnexion de réseaux qui comporte des réseaux locaux et des équipements d'interconnexion de réseaux tels que décrits précédemment, les équipements d'interconnexion de réseaux se connaissent respectivement, mais ils ne connaissent pas les adresses des stations des réseaux locaux auxquels ils sont connectés. Pour acheminer une trame à destination d'une station d'un de ces réseaux locaux, ils utilisent alors la technique de "l'inondation" décrite au paragraphe 5.4.2.2 de l'ouvrage de M. TANENBAUM intitulé "Réseaux Architectures, protocoles, applications" édité en 1990 par INTEREDITIONS à PARIS. Cette technique consiste, pour un équipement d'interconnexion de réseaux, à émettre toute trame de destination inconnue, issue d'une station d'un de ses réseaux locaux, et donc présente sur l'un de ses premiers ports, sur tous ses deuxièmes ports, c'est-à-dire en direction de tous les autres équipements d'interconnexion de réseaux du réseau intermédiaire. Cela conduit à une charge importante du réseau intermédiaire. Pour limiter cette charge, il est connu d'utiliser une fonction d'apprentissage d'adresses afin qu'au fur et à mesure que des trames circulent sur le système, les équipements d'interconnexion de réseaux apprennent où se situent les stations. Une fois une destination connue, les trames qui lui sont destinées sont placées directement sur le deuxième port adéquat, et le réseau intermédiaire n'est plus "inonde".

Une méthode couramment utilisée est décrite dans l'extrait de l'ouvrage précité sous le nom de méthode de BARAN ou "backward learning". Son principe est le suivant. Chaque équipement d'interconnexion de réseaux du réseau intermédiaire dispose d'une table qui associe l'adresse d'une station au port à utiliser pour lui transmettre une trame. Ainsi, lorsqu'il reçoit une trame sur l'un de ces ports, il recherche dans cette table l'adresse source de la trame. Si elle n'y figure pas, il l'enregistre avec le numéro de port sur lequel elle a été reçue. Lorsque l'équipement d'interconnexion de réseaux reçoit une trame à transmettre, il recherche alors son adresse de destination dans ladite table, et il décide en fonction du résultat si elle doit être envoyée sur un port donné ou sur l'ensemble du réseau intermédiaire, ou si elle doit être abandonnée.

Selon cette méthode, l'apprentissage de l'adresse d'une station par un équipement d'interconnexion de réseaux distant s'effectue à la réception d'une trame de données. Cela présente les inconvénients suivants. Tout d'abord, cette méthode met en oeuvre une recherche d'adresse dans une table de taille importante puisqu'elle contient les adresses des stations distantes. Le temps de traitement qui en résulte est donc long. De plus, si l'équipement d'interconnexion de réseaux connaît l'adresse de destination de la trame, il la place sur le port adéquat. Et seul l'équipement d'interconnexion de réseaux destinataire apprend l'adresse de la station émettrice. Le délai d'apprentissage de cette station par les autres équipements d'interconnexion de réseaux peut donc être important. Or lorsqu'un équipement d'interconnexion de réseaux ignore l'adresse de destination d'une trame, il "inonde" le réseau intermédiaire. Il en résulte une charge du réseau intermédiaire trop importante.

L'invention a pour but de proposer un équipement d'interconnexion de réseaux qui met en oeuvre une fonction d'apprentissage d'adresses permettant de remédier à ces inconvénients.

Pour cela, un équipement d'interconnexion de réseaux selon l'invention et tel que défini dans le paragraphe introductif est caractérisé en ce qu'il comporte, pour réaliser la fonction d'apprentissage d'adresses,
- une table d'adressage dite table locale pour mémoriser les adresses des stations des réseaux locaux qui lui sont connectés,
- des moyens pour former une trame de service, dite trame d'ajout, contenant lesdites adresses,
- des moyens pour fournir, lors de la réception sur ses deuxièmes ports d'une trame de service émise par un autre équipement d'interconnexion de réseaux du réseau intermédiaire, une indication de localisation dudit équipement d'interconnexion de réseaux
- une table d'adressage, dite table distante, pour enregistrer les adresses transmises par la trame d'ajout et l'indication de localisation correspondante.

Ainsi, lorsqu'un équipement d'interconnexion de réseaux reçoit, de l'un de ses réseaux locaux, une trame à transmettre, l'apprentissage d'adresse se fait localement. Puis, tous les équipements d'interconnexion distants sont avertis grâce à l'envoi d'une trame d'ajout. Cela signifie d'une part que la recherche d'adresse se fait dans la table locale, dont la taille est réduite, et que le traitement qui en résulte est beaucoup plus rapide. D'autre part, les équipements d'interconnexion de réseaux distants sont tous avertis simultanément, ce qui accélère l'apprentissage et permet donc globalement de réduire le nombre de trames de données diffusées sur le réseau intermédiaire. Enfin, les trames de service sont de taille très inférieure aux trames de données. Elles entraînent donc une surcharge très faible du réseau intermédiaire.

D'après un mode de réalisation préférentiel d'un équipement d'interconnexion de réseaux selon l'invention qui dispose d'une adresse sur le réseau intermédiaire et qui est relié à chaque équipement d'interconnexion distant par une liaison logique commutée, il contient une table de correspondance associant à chacune de ces liaisons logiques commutées l'adresse de l'équipement d'interconnexion de réseaux auquel elle le relie, de telle sorte que l'indication de localisation d'un de ces équipements d'interconnexion de réseaux dans sa table distante soit le numéro de la liaison logique commutée qui les relie.

Une liaison logique commutée est une notion abstraite indépendante du support physique et du protocole utilisé sur le réseau intermédiaire. Ce n'est pas le cas de l'adresse de l'équipement d'interconnexion de réseaux sur le réseau intermédiaire. De plus, la taille du numéro de la liaison logique commutée est inférieure à celle de l'adresse de l'équipement d'interconnexion de réseaux correspondant. Il est donc particulièrement intéressant d'utiliser le numéro de liaison logique commutée comme indication de localisation, puis de rechercher dans la table de correspondance l'adresse qui lui est associée.

Un équipement d'interconnexion de réseaux selon un mode de réalisation de l'invention comporte avantageusement
- une table, dite table de temporisation, qui affecte à chaque station mémorisée dans sa table locale, une durée de vie initialisée lors de chaque communication de ladite station, de telle sorte que toute station dont la durée de vie est écoulée soit supprimée de ladite table locale,
- des moyens pour former une trame de service, dite trame de retrait, qui est envoyée aux autres équipements d'interconnexion de réseaux du réseau intermédiaire lorsque la durée de vie d'une station est écoulée afin qu'elle soit supprimée de leurs tables distantes.

Ainsi, les stations qui ne communiquent plus sont retirées des tables d'adressage ce qui permet de libérer de la place pour de nouvelles stations. Pour éviter toute surcharge du réseau intermédiaire, il reste toutefois possible d'attribuer une durée de vie infinie à certaines stations.

D'après un mode de réalisation préférentiel d'un équipement d'interconnexion de réseaux selon l'invention, il comprend des moyens de mémorisation pour stocker les adresses à transmettre aux autres équipements d'interconnexion de réseaux de telle sorte que plusieurs adresses soient regroupées en une unique trame de service.

Cela permet de réduire le nombre de messages de service circulant sur le réseau intermédiaire. Toutefois, cette possibilité n'est utilisée que lorsque plusieurs adresses doivent être transmises en même temps, par exemple lorsqu'on transmet le contenu de la table locale. En effet, il n'est pas intéressant de retarder l'apprentissage d'adresses pour regrouper les adresses à transmettre. Cette possibilité est également utilisée en cas de congestion du réseau intermédiaire pour limiter le nombre de trames de service à transmettre.

Un équipement d'interconnexion de réseaux, selon un deuxième mode de réalisation de l'invention, qui dispose d'une table, dite table permanente, contenant une partie des adresses des stations d'au moins un des réseaux locaux auxquels il est connecté, comporte avantageusement des moyens pour que, lors de la mise en service d'au moins un des réseaux locaux connectés, sa table locale soit initialisée avec les données de cette table permanente et pour qu'une trame d'ajout transmette les adresses qu'elle contient aux autres équipements d'interconnexion de réseaux du réseau intermédiaire.

Cette table permanente permet d'enregistrer les adresses des stations dont le trafic est continu et qui sont rarement déplacées, c'est-à-dire pour lesquelles la phase d'apprentissage est inutile. Cette table permanente est fournie par le configurateur.

De plus, un équipement d'interconnexion de réseaux dispose avantageusement de moyens pour que, lors de la mise en service d'au moins un des réseaux locaux auxquels il est connecté, pendant un intervalle de temps dit temps d'écoute, les trames de données soient abandonnées, de façon à consacrer l'ensemble des ressources à l'apprentissage d'adresses exclusivement.

Lorsqu'un réseau local se connecte au réseau intermédiaire, le trafic est relativement dense et il est par conséquent possible d'apprendre un grand nombre d'adresses en un intervalle de temps court, puisque les ressources du réseau sont entièrement consacrées à cet apprentissage.

Dans un mode de réalisation préférentiel d'un équipement d'interconnexion de réseaux selon l'invention, les moyens utilisés pour réaliser la fonction d'apprentissage d'adresses comportent un contrôleur, une mémoire contenant les instructions de fonctionnement dudit contrôleur et un ensemble de mémoires contenant les données et les tables.

L'invention a aussi pour objet un commutateur qui comporte un équipement d'interconnexion de réseaux tel que défini dans les paragraphes précédents.

D'autres particularités, détails et avantages de l'invention seront mis en évidence par la description qui va suivre en regard des dessins annexés qui sont relatifs à des exemples donnés à titre non limitatif, dans lesquels :
- la figure 1 montre le schéma d'un exemple de système d'interconnexion de réseaux utilisant des équipements d'interconnexion de réseaux selon l'invention,
- la figure 2 est le schéma d'un exemple de réalisation d'un équipement d'interconnexion de réseaux selon l'invention,
- les figures 3 à 6 représentent un exemple d'organigramme de fonctionnement d'un contrôleur d'un équipement d'interconnexion de réseaux selon l'invention.

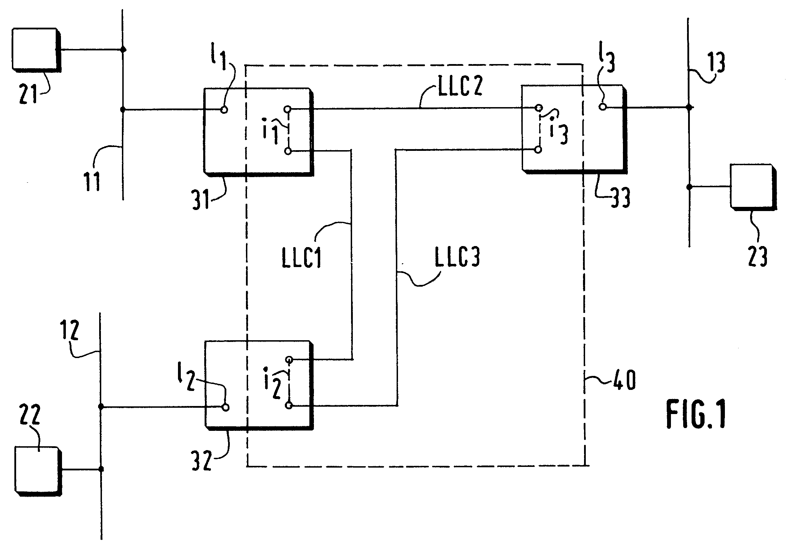

La figure 1 montre un exemple de système d'interconnexion de réseaux utilisant des équipements d'interconnexion de réseaux selon l'invention. Ce système d'interconnexion de réseaux comporte trois réseaux locaux 11, 12 et 13 auxquels sont reliées respectivement trois stations 21, 22 et 23. Ces trois réseaux locaux sont connectés respectivement à trois équipements d'interconnexion de réseaux 31, 32 et 33 par l'intermédiaire des trois ports l₁, l₂ et l₃ respectivement. Les trois équipements d'interconnexion de réseaux 31, 32 et 33 sont reliés chacun à un réseau intermédiaire 40 au moyen d'une pluralité de ports i₁, i₂ et i₃ respectivement. L'équipement d'interconnexion de réseaux 31 communique avec l'équipement d'interconnexion de réseaux 32 au moyen d'une première liaison logique commutée LLC1 et avec l'équipement d'interconnexion de réseaux 33 au moyen d'une seconde liaison logique commutée LLC2. Les équipements d'interconnexion de réseaux 32 et 33 communiquent entre eux au moyen d'une troisième liaison logique commutée LLC3. De telles liaisons sont indépendantes du support physique et du protocole utilisé sur le réseau intermédiaire.

Ainsi la station 21, par exemple, communique avec la station 22 ou avec la station 23 en passant par le réseau intermédiaire 40.

Sur la figure 1, seuls les équipements d'interconnexion de réseaux du réseau intermédiaire ont été représentés. Mais dans certaines configurations, le système d'interconnexion de réseaux contient d'autres équipements de réseaux qui n'appartiennent pas à l'invention et qui n'ont donc pas à être décrits.

Dans la suite de la description, les réseaux locaux considérés sont des réseaux Ethernet et le réseau intermédiaire est un réseau X25. Cet exemple de réalisation n'est pas limitatif et d'autres types de réseaux pourraient être utilisés.

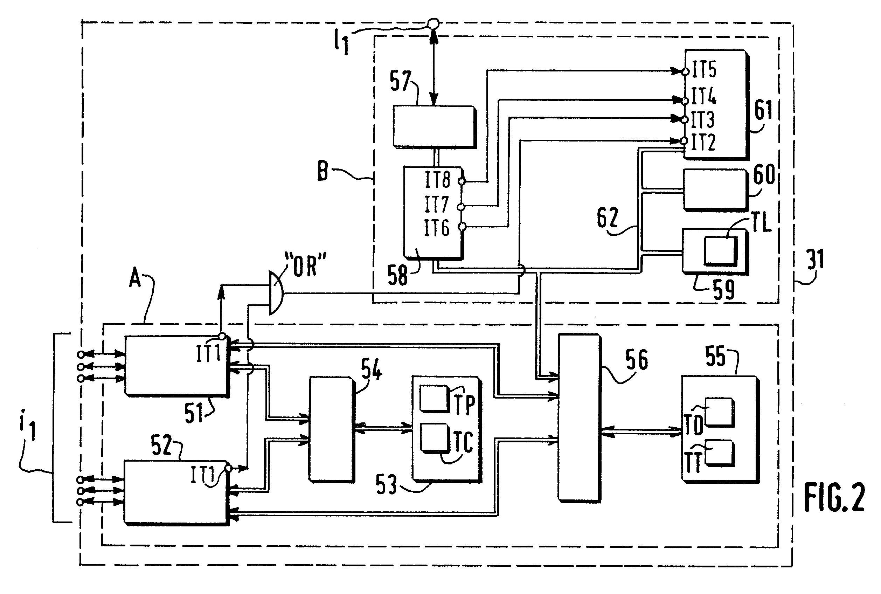

Selon la figure 2, un exemple de réalisation d'un équipement d'interconnexion de réseaux comprend une première partie A décrite en particulier dans l'article "New architecture for the Compac switch range" de la revue "Commutation & transmission" (volume 3, 1992), et une seconde partie B plus particulièrement relative à l'invention.

La partie A comprend deux microprocesseurs 51 et 52 qui sont de préférence des 68302 fabriqués par Motorola et disposent chacun de trois ports de connexion i₁ au réseau intermédiaire. Un port IT1 est réservé pour émettre des signaux d'interruption. Ces deux microprocesseurs 51 et 52 accèdent à un ensemble de mémoires 53 par l'intermédiaire d'un premier contrôleur d'accès 54 décrit dans la demande de brevet français n° 2667175. De même, ils accèdent à une première mémoire vive 55 par l'intermédiaire d'un second contrôleur d'accès 56. Les deux ports IT1 sont reliés à une porte "OR" qui réalise l'opération logique OU.

La partie B, plus particulièrement relative à l'invention, comprend une interface 57, un coprocesseur 58, une seconde mémoire vive 59, une mémoire statique 60 et un contrôleur 61 formé, par exemple, à partir du "transputer" T425 fabriqué par Inmos. Ce contrôleur 61 accède à la mémoire 59 et à la mémoire 60 par l'intermédiaire du bus 62. Il accède également à la première mémoire vive 55 par l'intermédiaire du contrôleur d'accès 56. De plus, le contrôleur 61 dispose de ports IT2, IT3, IT4 et IT5 pour recevoir des signaux d'interruption. Le port IT2 est relié aux ports IT1 des microprocesseurs 51 et 52 par l'intermédiaire de la porte "OR". L'interface 57 dispose d'un port d'accès l₁ au réseau local. Le coprocesseur 58 dispose de trois ports IT6, IT7 et IT8 pour émettre des signaux d'interruption vers les ports IT3, IT4 et IT5 du contrôleur 61, respectivement.

La première mémoire vive 55 est accessible par les microprocesseurs 51 et 52, par le coprocesseur 58 et par le contrôleur 61. Elle contient toutes les données issues du réseau intermédiaire ou du réseau local. C'est le point d'échange des données entre les deux réseaux. En particulier, elle contient une table d'adressage dite table distante TD dans laquelle sont enregistrées les adresses des stations des réseaux locaux distants et le numéro de la liaison logique commutée à utiliser pour leur transmettre une trame. Elle contient également une table de temporisation TT dans laquelle sont enregistrées les durées de vie associées aux stations du réseau local connecté au port l₁.

La seconde mémoire vive 59 contient une table d'adressage dite table locale TL dans laquelle les adresses des stations du réseau local qui ont communiqué sont enregistrées. L'emplacement de cette dernière table d'adressage a été choisi de telle sorte que les comparaisons d'adresses locales puissent être effectuées très rapidement.

L'ensemble de mémoires 53 comporte en outre une table permanente TP, configurée par l'utilisateur, qui contient les adresses de certaines stations du réseau local pour lesquelles l'apprentissage est réalisé systématiquement lors de la mise en service du réseau local. Il comporte également une table de correspondance TC entre l'adresse, sur le réseau intermédiaire, d'un équipement d'interconnexion de réseaux distant, et le numéro de la liaison logique commutée à utiliser pour lui envoyer une trame. Il comporte enfin le programme et les données nécessaires au fonctionnement des microprocesseurs 51 et 52.

La mémoire statique 60 contient les instructions de fonctionnement du contrôleur 61.

Les microprocesseurs 51 et 52 traitent des fonctions de communication de l'équipement d'interconnexion de réseaux. En particulier, ils gèrent les liaisons logiques commutées et les transferts entre réseau intermédiaire et réseaux locaux.

Le coprocesseur 58 gère l'interface avec le réseau local. Dans le cas où le réseau local est un réseau Ethernet, il est de préférence formé à partir d'un coprocesseur Intel de type 82596DX qui est alors suivi d'un transmetteur Intel 82503 qui correspond à l'interface physique 57 avec le réseau local. En particulier, lorsqu'une trame arrive en provenance du réseau local, le coprocesseur 58 l'enregistre et émet un signal d'interruption sur son port IT6 vers le contrôleur 61 afin que celui-ci vienne la lire. De même, lorsque le réseau local est mis en service ou hors service, le coprocesseur émet un signal d'interruption sur ses ports IT7 et IT8 respectivement, vers le contrôleur 61 afin qu'il effectue le traitement approprié.

Le contrôleur 61 gère les interruptions. Il gère également la fonction d'apprentissage d'adresses et une fonction de filtrage. Cette fonction de filtrage consiste à rechercher l'adresse de la station émettrice, dite adresse source, et l'adresse de la station destinataire, toutes deux comprises dans la trame de données émise par le réseau local, dans les tables locale TL et distante TD de l'équipement d'interconnexion de réseaux. Le résultat de cette recherche permet d'aiguiller la trame de données qui est, soit diffusée sur l'ensemble du réseau intermédiaire, soit envoyée sur la liaison logique commutée adéquate, soit abandonnée.

La fonction d'apprentissage d'adresses assure :
- l'apprentissage des adresses des stations du réseau local connecté au port l₁, c'est-à-dire leur écriture dans la table locale,
- la mise à jour des tables distantes,
- la gestion de la table de temporisation.

Hors des périodes qui suivent immédiatement la mise en service d'un réseau local, et hors des périodes de congestion du réseau intermédiaire, le principe de base de cet apprentissage d'adresses est le suivant : lorsqu'un équipement d'interconnexion de réseaux reçoit d'une station d'un de ses réseaux locaux qui lui est encore inconnue, une trame de données à transmettre, une trame d'ajout est immédiatement diffusée sur le réseau intermédiaire. De même, lorsque la durée de vie d'une station est écoulée, une trame de retrait est immédiatement diffusée sur le réseau intermédiaire.

Dans cet exemple de réalisation, on dispose donc de six ports de connexion i₁ au réseau intermédiaire puisque chaque microprocesseur Motorola 68302 en fournit trois. Ce nombre n'est pas limitatif.

L'équipement d'interconnexion de réseaux 31 vient d'être décrit. Dans l'exemple représenté sur la figure 1, les équipements d'interconnexion 32 et 33 sont préférentiellement réalisés de façon similaire.

Lors d'une communication, les microprocesseurs 51 et 52 d'une part et le contrôleur 61 d'autre part, assurent chacun une partie du traitement. Des commandes doivent donc être transmises de l'un à l'autre. Un mécanisme d'échange de messages est prévu à cet effet. Le format des messages échangés est le suivant : chaque message a une taille de 32 bits. Les 8 bits de poids fort correspondent à un code qui indique le type du message. Les 24 bits suivants désignent un pointeur vers une zone de la première mémoire vive 55 qui contient les données nécessaires à l'exécution de la commande.

Les différents types de messages échangés des microprocesseurs 51 et 52 vers le contrôleur 61 sont les suivants :
- initialisation de la table locale TL,
- mise en service d'une liaison logique commutée,
- réception d'une trame de données émise par une station distante,
- mise à jour de la table distante TD de l'équipement d'interconnexion de réseaux,
- mise hors service d'une liaison logique commutée.

Lorsqu'un tel message est émis des microprocesseurs 51 et 52 vers le contrôleur 61, il est déposé dans une file d'attente, située dans la première mémoire vive 55, et l'un des microprocesseurs 51 et 52 émet un signal d'interruption sur son port IT1 vers le contrôleur 61 afin que ce dernier aille lire ledit message dans ladite file d'attente.

Les différents messages échangés du contrôleur 61 vers les microprocesseurs 51 et 52 sont les suivants :
- mise en service du réseau local,
- mise à jour des tables distantes des équipements d'interconnexion de réseaux distants,
- mise à jour de la table distante de l'équipement d'interconnexion de réseaux concerné,
- envoi de la trame de données sur la liaison logique commutée adéquate,
- diffusion de la trame de données sur toutes les liaisons logiques commutées,
- mise hors service du réseau local.

Lorsqu'un tel message est émis du contrôleur 61 vers les microprocesseurs 51 et 52, il est placé dans une file d'attente, située dans la première mémoire vive 55, qui est scrutée régulièrement par les microprocesseurs 51 et 52 afin de lire lesdits messages.

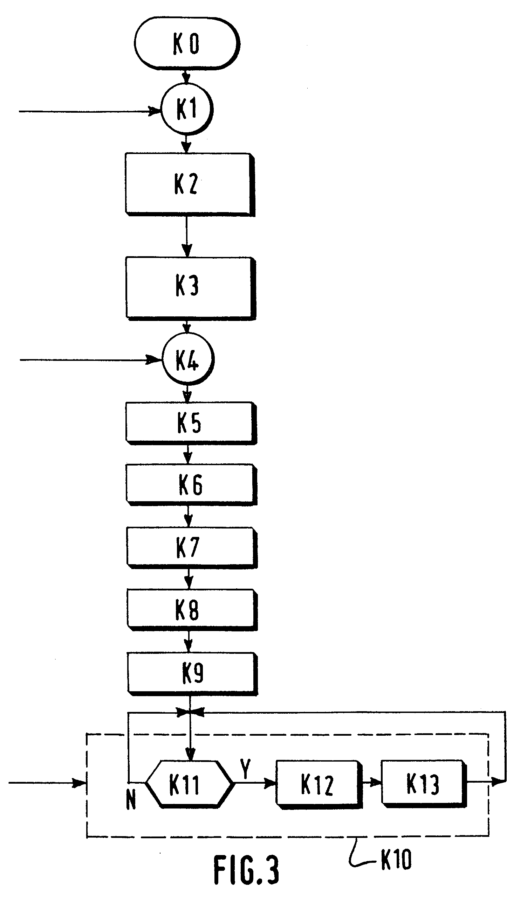

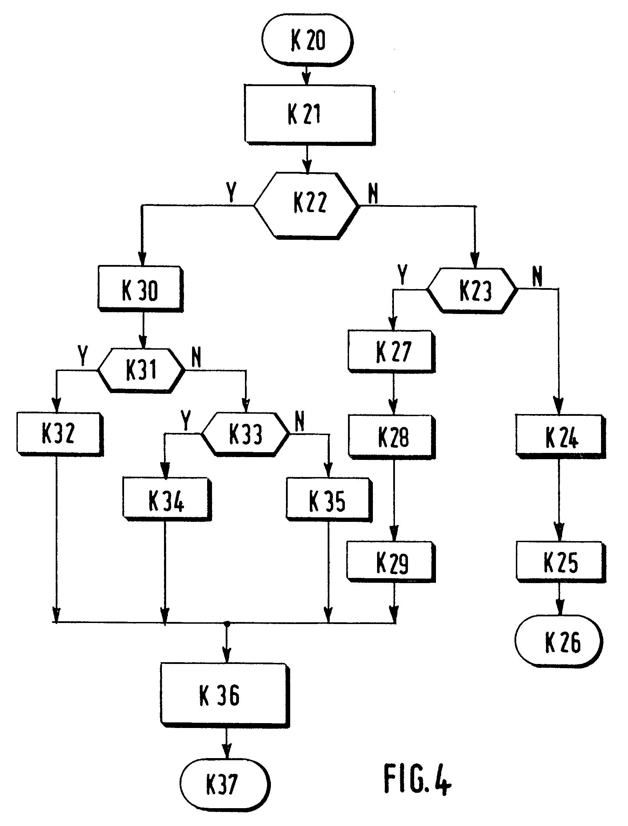

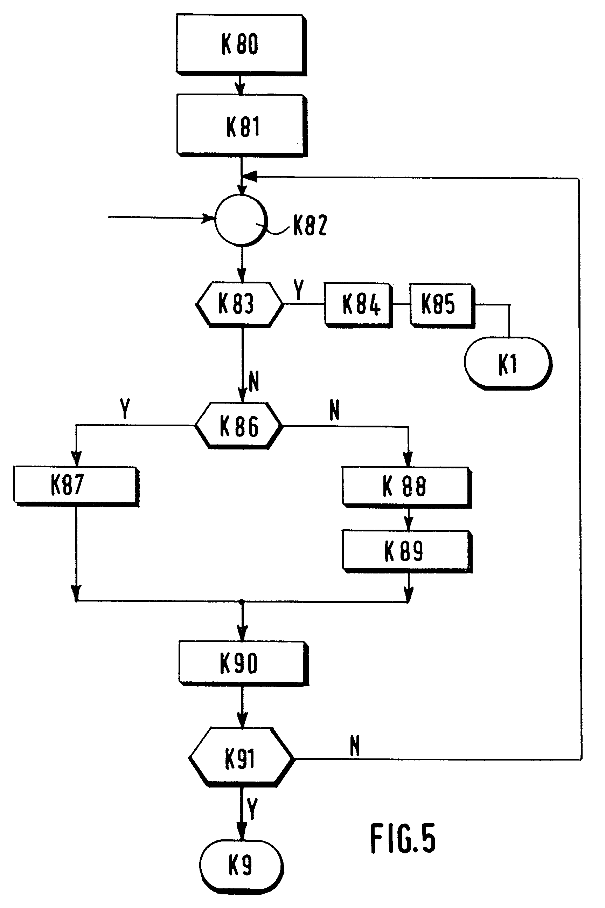

La figure 3 représente un exemple d'organigramme de fonctionnement d'un contrôleur d'un équipement d'interconnexion de réseaux selon l'invention, qui est implanté dans la mémoire 60. La signification des différentes cases de cet organigramme est donnée ci-dessous dans l'ordre d'exécution :
- Case K0 : Cette case représente le début du programme.
- Case K1 : Le contrôleur 61 attend la réception d'une interruption sur son port IT4. Cette interruption correspond à la mise en service du réseau local. Lorsqu'il la reçoit, il poursuit son exécution à la case K2.
- Case K2 : Les interruptions arrivant sur le port IT3 et IT5 sont masquées.
- Case K3 : Un message de type "mise en service du réseau local" est alors envoyé aux microprocesseurs 51 et 52 afin qu'ils cherchent à établir des liaisons logiques commutées avec tous les équipements d'interconnexion de réseaux distants.
- Case K4 : Le contrôleur attend de recevoir une interruption sur son port IT2. Lorsqu'il l'a reçue, il passe à l'exécution de la case K5.
- Case K5 : Les interruptions arrivant sur le port IT2 sont masquées.
- Case K6 : Le contrôleur 61 lit le message correspondant à l'interruption dans la file d'attente adaptée. Ce message est la réponse au message envoyé par le contrôleur 61 à la case K3, c'est-à-dire que c'est un message de type "initialisation de la table locale TL".
- Case K7 : La table locale TL est initialisée avec les adresses contenues dans la table permanente TP, qui ont été transmises par les microprocesseurs 51 et 52.
- Case K8 : Le contrôleur 61 traite l'ensemble des opérations à effectuer pendant le temps d'écoute, et en particulier l'apprentissage des adresses des stations du réseau local. Cette case est détaillée sur la figure 5.
- Case K9 : Les interruptions arrivant sur le port IT2 sont démasquées.
- Case K10 : Cette case virtuelle regroupe un ensemble d'opérations (case K11, case K12, case K13) qui peuvent être interrompues à tout instant par une interruption arrivant sur les ports IT2, IT3 ou IT5 du contrôleur 61. Le traitement relatif à une telle interruption est représenté sur la figure 4. Il consiste à sauvegarder le contexte, traiter l'interruption, rétablir le contexte et reprendre le programme qui était en cours avant l'interruption, là où il a été abandonné. Un tel traitement peut lui même être interrompu.
- Case K11 : Cette case succède à la case K9. Si la durée de vie d'au moins une des stations du réseau local arrive à échéance, le contrôleur exécute la case K12 puis la case K13. Sinon, il reprend à la case K11.
- Case K12 : La table locale TL de l'équipement d'interconnexion de réseaux est mise à jour.
- Case K13 : Un message de type "mise à jour des tables distantes des équipements d'interconnexion de réseaux distants" est envoyé aux microprocesseurs 51 et 52 afin qu'ils diffusent immédiatement la trame de retrait correspondante sur l'ensemble du réseau intermédiaire. Puis le programme reprend à la case K11.

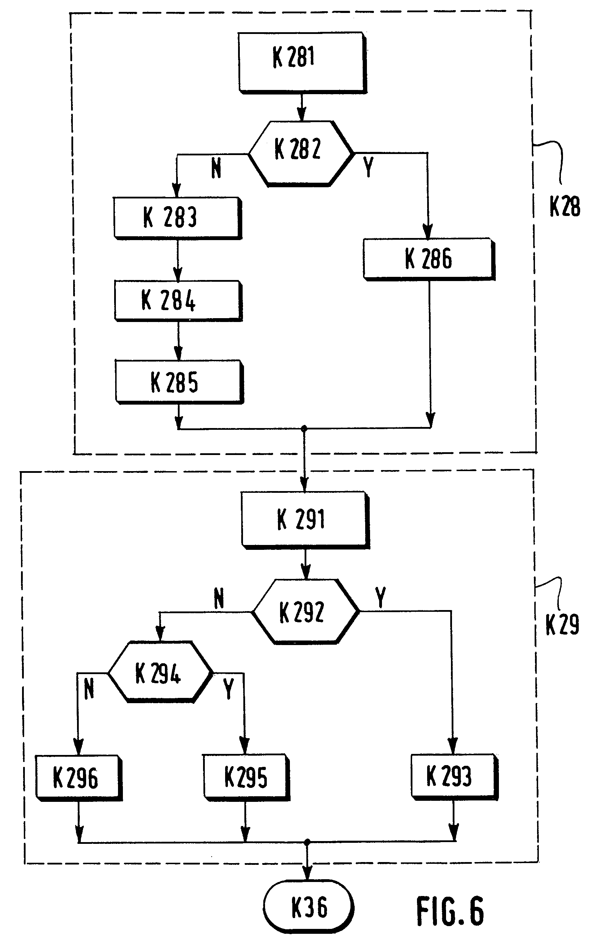

La figure 4 est un exemple d'organigramme qui détaille, dans l'ordre d'exécution, le traitement à effectuer en cas d'interruption à la case K10 (ou en cas d'interruption dudit traitement), selon l'origine de l'interruption (port IT2, IT3 ou IT5) et selon le type du message qui lui est associé.
- Case K20 : Cette case représente le début du traitement d'interruption.
- Case K21 : Le contexte est sauvegardé.
- Case K22 : Le contrôleur 61 teste si l'interruption est arrivée sur le port IT2. Si c'est le cas (le message est envoyé par l'un des microprocesseurs 51 et 52) le programme continue à la case K30. Sinon, il continue à la case K23.
- Case K23 : Le contrôleur 61 teste si l'interruption est arrivée sur le port IT3. Si c'est le cas, il passe à la case K27. Sinon, elle est arrivée sur le port IT5, et le contrôleur 61 passe à la case K24.
- Case K24 : Il s'agit d'une mise hors service du réseau local. Les tables d'adressage de l'équipement d'interconnexion de réseaux sont remises à zéro. Puis le programme continue à la case K25.
- Case K25 : Un message de type "mise hors service du réseau local" est envoyé aux microprocesseurs 51 et 52 afin qu'ils déclarent hors service, pour chaque équipement d'interconnexion de réseaux distant, la liaison logique commutée qui le relie à l'équipement d'interconnexion de réseaux 31.
- Case K26 : Le programme reprend à la case K1.
- Case K27 : La trame de données correspondant à l'interruption est lue par le contrôleur 61. Puis il passe à la case K28.
- Case K28 : L'apprentissage d'adresse est réalisé. Cette fonction est détaillée sur la figure 6.
- Case K29 : Le filtrage est effectué afin de déterminer la destination de la trame (diffusion sur l'ensemble du réseau intermédiaire, émission sur une liaison logique commutée déterminée ou abandon). Cette fonction est également détaillée sur la figure 6. A l'issue de la case K29, le programme continue à la case K36.
- Case K30 : L'interruption arrive sur le port IT2; elle correspond donc à un message envoyé par l'un des deux microprocesseurs 51 et 52. Le message est lu dans la file d'attente adaptée. Puis le programme continue à la case K31.
- Case K31 : Le contrôleur 61 teste si le message est du type " mise en service d'une liaison logique commutée". Si c'est le cas, il passe à la case K32. Sinon, il passe à la case K33.
- Case K32 : Un message de type "mise à jour de la table distante de l'équipement d'interconnexion de réseaux concerné" est envoyé aux microprocesseurs 51 et 52 afin qu'ils envoient, à l'équipement d'interconnexion de réseaux concerné, un message d'ajout contenant les adresses de la table locale TL de l'équipement d'interconnexion de réseaux 31. Puis le contrôleur 61 exécute la case K36.
- Case K33 : Le contrôleur 61 teste s'il s'agit d'un message de type "réception d'une trame de données émise par une station distante". Dans ce cas il exécute la case K34. Sinon, il exécute la case K35.
- Case K34 : La trame de données est transmise directement sur le réseau local. Puis le programme reprend à la case K36.
- Case K35 : Il s'agit d'un message de type "mise hors service d'une liaison logique commutée" ou "mise à jour de la table distante de l'équipement d'interconnexion de réseaux". La table distante TD de l'équipement d'interconnexion de réseaux est donc mise à jour. Puis le programme reprend à la case K36.
- Case K36 : Le contexte est restauré.
- Case K37 : Le programme reprend là où il a été interrompu.

La figure 5 détaille les fonctions de la case K8 qui gère le temps d'écoute du réseau local. La signification des différentes cases représentées sur l'organigramme est décrite ci-dessous dans l'ordre d'exécution.
- Case K80 : Le temps d'écoute est initialisé.
- Case K81 : Les interruptions arrivant sur les ports IT3 et IT5 du contrôleur 61 sont démasquées.
- Case K82 : Le contrôleur 61 attend l'arrivée d'une interruption sur l'un de ses ports IT3 ou IT5.
- Case K83 : Si l'interruption arrive sur le port IT5, cela signifie que le réseau local est hors service. Le contrôleur exécute alors les cases K84 et K85 avant de retourner à la case K1. Sinon, il passe à la case K86.
- Case K84 : Les tables de l'équipement d'interconnexion sont remises à zéro.
- Case K85 : Un message de type "mise hors service du réseau local" est envoyé aux microprocesseurs 51 et 52.
- Case K86 : L'interruption est arrivée sur le port IT3; elle indique donc la réception d'une trame de données. L'adresse source en est extraite, puis elle est recherchée dans la table locale TL. Si elle y figure, le programme passe à la case K87. Sinon, il passe à la case K88 puis à la case K90.
- Case K87 : La durée de vie de la station émettrice est réinitialisée. Puis le programme continue à la case K88.
- Case K88 : L'adresse source de la trame est ajoutée dans la table locale TL.
- Case K89 : La durée de vie de la station est initialisée. Puis le programme continue à la case K90.
- Case K90 : La trame de donnée est abandonnée (c'est-à-dire qu'elle n'est pas transmise aux microprocesseurs 51 et 52).
- case K91 : Si le temps d'écoute arrive à échéance, le programme reprend à la case K9 décrite sur la figure 3. Sinon, il reprend à la case K82.

La figure 6 détaille les fonctions d'apprentissage d'adresses et de filtrage (les cases K281 à K286 détaillent la case K28 et les cases K291 à K296 détaillent la case K29). Les cases représentées sur l'organigramme sont décrites ci-dessous, dans l'ordre d'exécution.
- Case K281 : L'adresse source de la trame de données Ethernet est extraite.
- Case K282 : L'adresse source est recherchée dans la table locale TL. Si elle n'y figure pas, le programme exécute les cases K283, K284 et K285. Sinon, il passe à la case K286.
- Case K283 : L'adresse est ajoutée dans la table locale TL.
- Case K284 : La durée de vie de la station est initialisée.
- Case K285 : Un message de type "mise à jour des tables distantes des équipements d'interconnexion de réseaux distants" est envoyé aux microprocesseurs 51 et 52 afin qu'ils diffusent immédiatement la trame d'ajout correspondante sur l'ensemble du réseau intermédiaire. Puis le programme passe à la case K291.
- Case K286 : La durée de vie de la station émettrice est réinitialisée. Puis le programme passe à la case K291.
- Case K291 : L'adresse destinataire de la trame de données Ethernet est extraite.
- Case K292 : L'adresse destinataire est recherchée dans la table locale TL. Si elle y figure, le programme exécute la case K293. Sinon, il exécute la case K294.
- Case K293 : Le destinataire de la trame de données se situant sur le réseau local, il est inutile de la transmettre sur le réseau intermédiaire. La trame est donc abandonnée. Puis le programme reprend à la case K36 décrite sur la figure 4.
- Case K294 : L'adresse destinataire est recherchée dans la table distante TD. Si elle y figure, le programme passe à la case K295. Sinon, il passe à la case K296.
- Case K295 : Un message de type "envoi de la trame de données sur la liaison logique commutée adéquate" est envoyé aux microprocesseurs 51 et 52. Puis le programme continue à la case K36.
- Case K296 : Un message de type "diffusion de la trame de données sur toutes les liaisons logiques commutées" est envoyé aux microprocesseurs 51 et 52. Puis le programme continue à la case K36.

Il va de soi que des modifications peuvent être apportées aux modes de réalisations qui viennent d'être décrits, notamment par substitution de moyens techniques équivalents, sans que l'on sorte pour cela du cadre de l'invention.

## Revendications

1. Equipement d'interconnexion de réseaux (31, 32, 33) présentant une fonction d'apprentissage d'adresses et comportant:
- au moins un premier port (l₁, l₂, l₃) pour se relier à au moins un réseau local (11, 12, 13),
- des deuxièmes ports (i₁, i₂, i₃) pour se relier à un réseau intermédiaire (40) de telle sorte qu'une première station (21, 22, 23) d'un premier réseau local (11, 12, 13) connecté à un premier équipement d'interconnexion de réseaux (31, 32, 33) puisse échanger des trames de données avec une seconde station (21, 22, 23) d'un second réseau local (11, 12, 13) connecté à un second équipement d'interconnexion de réseaux (31, 32, 33) relié au premier par le réseau intermédiaire (40),
- une pluralité de tables d'adressage,
- des moyens de gestion de trames de service, échangées entre équipements d'interconnexion de réseaux (31, 32, 33)
- des moyens d'émission pour émettre les trames sur ses deuxièmes ports (i₁, i₂, i₃) en direction des autres équipements d'interconnexion de réseaux (31, 32, 33) du réseau intermédiaire (40),
- des moyens de réception pour recevoir sur ses deuxièmes ports (i₁, i₂' i₃) les trames émises par les autres équipements d'interconnexion de réseaux (31, 32, 33) du réseau intermédiaire (40), caractérisé en ce qu'il comporte, pour réaliser la fonction d'apprentissage,
- une table d'adressage dite table locale (TL) pour mémoriser les adresses des stations (21, 22, 23) des réseaux locaux (11, 12, 13) qui lui sont connectés,
- des moyens pour former une trame de service, dite trame d'ajout, contenant lesdites adresses,
- des moyens pour fournir, lors de la réception sur ses deuxièmes ports (i₁, i₂, i₃) d'une trame de service émise par un autre équipement d'interconnexion de réseaux (31, 32, 33) du réseau intermédiaire (40), une indication de localisation dudit équipement d'interconnexion de réseaux (31, 32, 33),
- une table d'adressage, dite table distante (TD), pour enregistrer les adresses transmises par la trame d'ajout et l'indication de localisation correspondante.

2. Equipement d'interconnexion de réseaux (31, 32, 33) selon la revendication 1, qui dispose d'une adresse sur le réseau intermédiaire (40) et qui est relié à chaque équipement d'interconnexion distant (31, 32, 33) par l'intermédiaire d'une liaison logique commutée (LLC1, LLC2, LLC3), caractérisé en ce qu'il contient une table de correspondance (TC) associant à chacune de ces liaisons logiques commutées (LLC1, LLC2, LLC3) l'adresse de l'équipement d'interconnexion de réseaux (31, 32, 33) auquel elle le relie, de telle sorte que l'indication de localisation d'un de ces équipements d'interconnexion de réseaux (31, 32, 33) dans sa table distante (TD) soit le numéro de la liaison logique commutée (LLC1, LLC2, LLC3) qui les relie.

3. Equipement d'interconnexion de réseaux (31, 32, 33) selon l'une des revendications 1 à 2 , caractérisé en ce qu'il comporte
- une table, dite table de temporisation (TT), qui affecte à chaque station mémorisée dans sa table locale (TL), une durée de vie initialisée lors de chaque communication de ladite station, de telle sorte que toute station dont la durée de vie est écoulée soit supprimée de ladite table locale (TL),
- des moyens pour former une trame de service, dite trame de retrait, qui est envoyée aux autres équipements d'interconnexion de réseaux (31, 32, 33) du réseau intermédiaire (40) lorsque la durée de vie d'une station est écoulée, afin qu'elle soit supprimée de leurs tables distantes (TD).

4. Equipement d'interconnexion de réseaux (31, 32, 33) selon l'une des revendications 1 à 3, caractérisé en ce qu'il dispose de moyens de mémorisation pour stocker les adresses à transmettre aux autres équipements d'interconnexion de réseaux de telle sorte que plusieurs adresses soient regroupées en une unique trame de service.

5. Equipement d'interconnexion de réseaux (31, 32, 33) selon l'une des revendications 1 à 4, qui dispose d'une table, dite table permanente (TP), contenant une partie des adresses des stations (21, 22, 23) d'au moins un des réseaux locaux (11, 12, 13) auxquels il est connecté, caractérisé en ce qu'il comporte des moyens pour que, lors de la mise en service d'au moins un des réseaux locaux connectés (11, 12, 13), sa table locale (TL) soit initialisée avec les données de cette table permanente (TP) et pour qu'une trame d'ajout transmette les adresses qu'elle contient aux autres équipements d'interconnexion de réseaux (31, 32, 33) du réseau intermédiaire (40).

6. Equipement d'interconnexion de réseaux (31, 32, 33) selon l'une des revendications 1 à 5, caractérisé en ce qu'il dispose de moyens pour que, lors de la mise en service d'au moins un des réseaux locaux auxquels il est connecté (11, 12, 13), pendant un intervalle de temps dit temps d'écoute, les trames de données soient abandonnées, de façon à consacrer l'ensemble des ressources à l'apprentissage d'adresses exclusivement.

7. Equipement d'interconnexion de réseaux (31, 32, 33) selon l'une des revendications 1 à 6, caractérisé en ce que les moyens utilisés pour réaliser la fonction d'apprentissage d'adresses comportent un contrôleur (61), une mémoire (60) contenant les instructions de fonctionnement dudit contrôleur et un ensemble de mémoires (53, 55, 59) contenant les données et les tables.

8. Commutateur, caractérisé en ce qu'il comporte un équipement d'interconnexion selon les revendications 1 à 7.
